# EUROPEAN PATENT SPECIFICATION

(11) **EP 4 354 387 B1**
(45) Date of publication and mention of the grant of the patent: **06.05.2026**
(21) Application number: 21945243.0
(22) Date of filing: 08.12.2021
(51) Int. Cl.: G06T 7/00, G06V 10/25, G06V 10/77, G06V 10/82

(54) **IMAGE PROCESSING DEVICE, IMAGE PROCESSING METHOD, AND IMAGE PROCESSING PROGRAM**
BILDVERARBEITUNGSVORRICHTUNG, BILDVERARBEITUNGSVERFAHREN UND BILDVERARBEITUNGSPROGRAMM
DISPOSITIF DE TRAITEMENT D'IMAGE, PROCÉDÉ DE TRAITEMENT D'IMAGE ET PROGRAMME DE TRAITEMENT D'IMAGE

(30) Priority: 09.06.2021 WO PCT/JP2021/021935
(43) Date of publication of application: 17.04.2024
(73) Proprietor: NTT, Inc., Tokyo 100-8116 (JP)
(72) Inventor: OMORI, Yuya, Musashino-shi, Tokyo 180-8585 (JP); NAKAMURA, Ken, Musashino-shi, Tokyo 180-8585 (JP); KOBAYASHI, Daisuke, Musashino-shi, Tokyo 180-8585 (JP); YOSHIDA, Shuhei, Musashino-shi, Tokyo 180-8585 (JP); HATTA, Saki, Musashino-shi, Tokyo 180-8585 (JP); UZAWA, Hiroyuki, Musashino-shi, Tokyo 180-8585 (JP); NITTA, Koyo, Musashino-shi, Tokyo 180-8585 (JP)
(74) Representative: DREISS Patentanwälte PartG mbB
(86) International application number: PCT/JP2021/045206
(87) International publication number: WO 2022/259574

(56) References cited:
- WO-A1-2019/234794
- WO-A1-2020/190772
- CN-A- 110 163 370
- US-A1- 2019 147 319
- US-A1- 2019 279 095
- US-A1- 2021 117 781
- ANGSHUMAN PARASHAR, MINSOO RHU, ANURAG MUKKARA, ANTONIO PUGLIELLI, RANGHARAJAN VENKATESAN, BUCEK KHAILANY, JOL EMER, STEPHEN W. KE: "SCNN: An Accelerator for Compressed-sparse Convolutional Neural Networks", 23 May 2017 (2017-05-23), XP055506017, Retrieved from the Internet <URL:https://arxiv.org/pdf/1708.04485.pdf> [retrieved on 20180911]

## Description

### Technical Field

The technology of the present disclosure relates to an image processing device, an image processing method, and an image processing program.

### Background Art

In a case where inference using a convolutional neural network (CNN) is performed, a network includes a plurality of layers, and convolution processing is performed in a convolutional layer. Convolution processing performs a product-sum operation and activation processing.

In inference using a CNN, the convolution operation described above occupies most of the entire processing amount.

Even in a case where an inference engine using a CNN as hardware is implemented, performance of the convolution operation is directly connected to the performance of the entire engine.

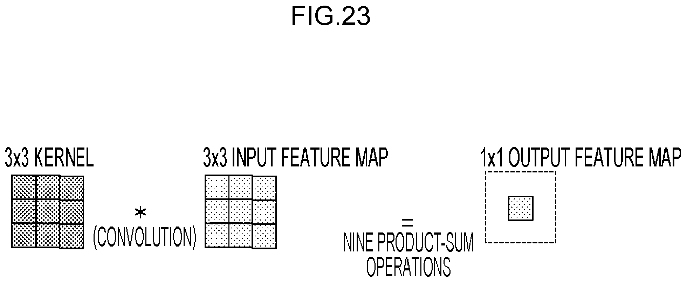

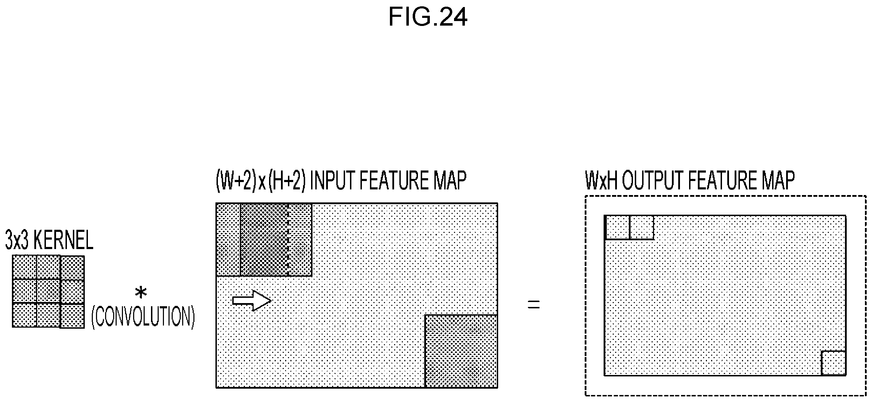

Figs. 23 and 24 illustrate examples of the convolution operation in a case where the kernel size is 3 × 3. Fig. 23 illustrates an example in which a convolution operation is performed on a 3 × 3 input feature map using a 3 × 3 kernel. In this example, nine product-sum operations are performed to output a 1 × 1 output feature map.

Furthermore, Fig. 24 illustrates an example in which a convolution operation is performed on a (W + 2) × (H + 2) input feature map using a 3 × 3 kernel. In this example, nine product-sum operations are repeated while moving the kernel on the input feature map to output a W × H output feature map.

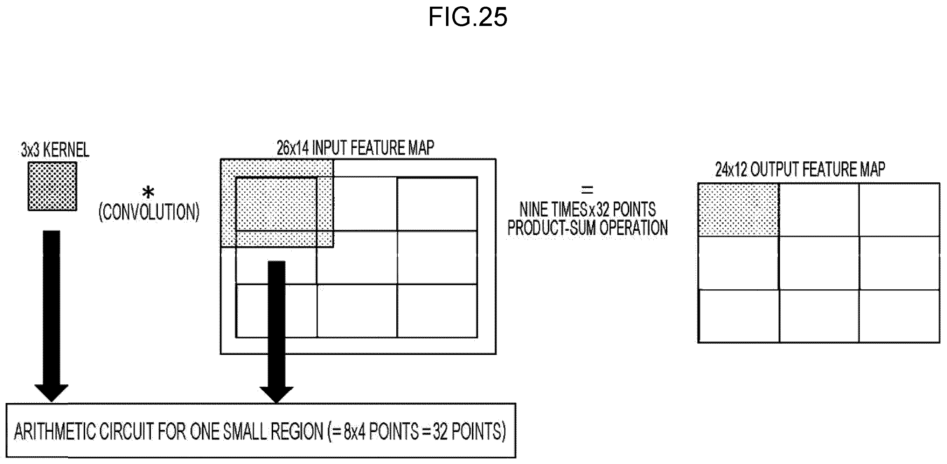

In hardware that performs a convolution operation of a CNN, in order to increase throughput, a circuit is often prepared so that the input feature map is divided into small regions of a certain fixed size and a product-sum operation for one small region can be performed at a time (see Fig. 25). Fig. 25 illustrates an example in which a 26 × 14 input feature map is divided into nine 10 × 6 small regions, and an arithmetic circuit performs convolution processing at 32 points (8 × 4 points) simultaneously using a 3 × 3 kernel and outputs an 8 × 4 output feature map. In this example, a dot part of the input feature map is one small region, and the arithmetic circuit performs 32-point simultaneous convolution processing on each of the nine small regions, thereby outputting a 24 × 12 output feature map.

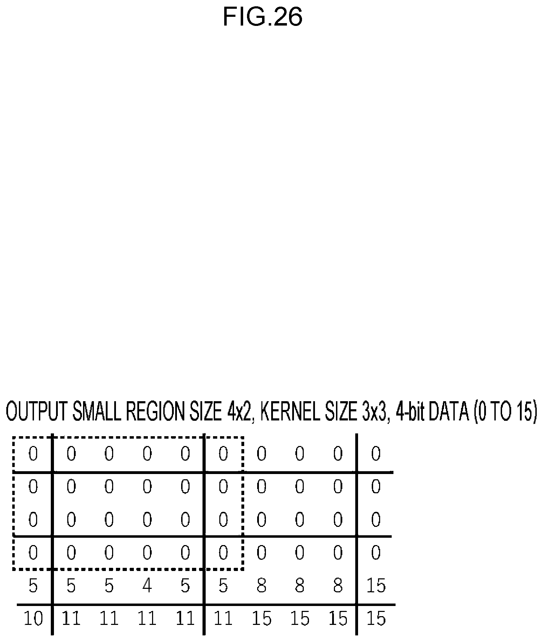

Furthermore, as one of the calculation speedup methods, as illustrated in Fig. 26, a method of skipping the calculation in a case where values of a small region of the input feature map are all 0 is known (see Non Patent Literature 1, for example). Fig. 26 illustrates an example of a case where the size of the output small region is 4 × 2, the kernel size is 3 × 3, and 4-bit data representing 0 to 15 is used. In this example, the size of the small region of the input feature map is 6 × 4, and values of the small region indicated by the dotted line are all 0. Since the result of product-sum operation with respect to 0 is 0, it is not necessary to perform the convolution processing by the arithmetic circuit, and the convolution processing on the small region can be skipped.

### Citation List

CN110163370A describes a deep neural network compression method in which each layer's feature map is compressed using video-coding techniques (prediction, transform, quantisation, entropy coding) and stored to reduce memory bandwidth.

Non Patent Literature 1: Angshuman Parashar, Minsoo Rhu, Anurag Mukkara, Antonio Puglielli, Rangharajan Venkatesan, Brucek Khailany, Joel Emer, Stephen W. Keckler, William J. Dally, "SCNN: An Accelerator for Compressed-sparse Convolutional Neural Networks", arXiv:1708.04485, 23 May 2017

### Summary of Invention

### Technical Problem

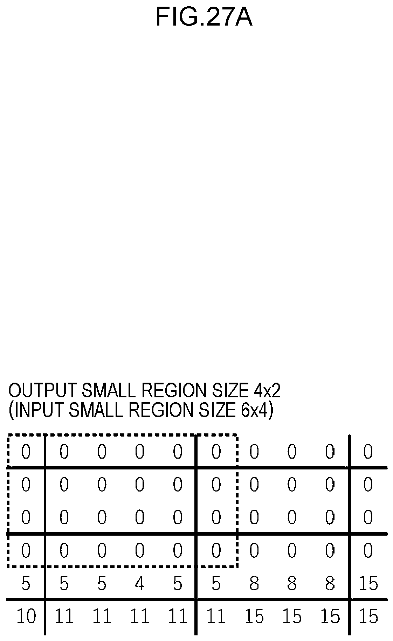

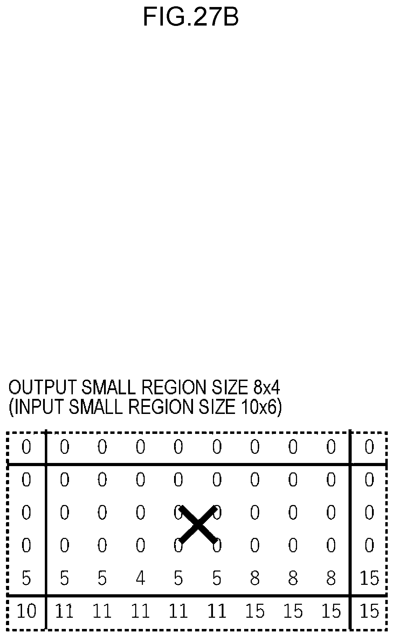

Here, if an attempt is made to increase the size of the small region in order to increase throughput, there will be less cases where all the values of the small region of the input feature map are 0, and a sufficient calculation speedup cannot be expected. For example, as illustrated in Fig. 27A, in a case where the size of the small region of the output feature map is 4 × 2 (case where size of small region of input feature map is 6 × 4), values of the small region indicated by the dotted line of the input feature map are all 0. On the other hand, as illustrated in Fig. 27B, in a case where the size of the small region of the output feature map is 8 × 4 (case where size of small region of input feature map is 10 × 6), a non-zero value is included in the small region indicated by the dotted line of the input feature map.

Furthermore, the size of the small region is directly connected to calculation throughput, and therefore is difficult to change in many cases.

Furthermore, in a case where the output feature map is output to a memory, the larger the data size, the longer the memory access takes, and the more severely the calculation speedup is hindered.

The technology disclosed herein has been made in view of the above points, and an object thereof is to provide an image processing device, an image processing method, and an image processing program capable of suppressing the data size when an output feature map is output.

### Solution to Problem

The invention is defined by the appended claims.

A first aspect of the present disclosure is an image processing device including a neural network including convolution processing for an image, the image processing device including an acquisition unit that acquires a target image to be processed, and a processing unit that processes the target image using the neural network including convolution processing, in which when an output feature map constituting an output of the convolution processing is output, the processing unit outputs, to a storage unit, respective small regions dividing the output feature map, and when each of the small regions is output to the storage unit, in a case in wich a feature included in the small region is the same as a predetermined feature or a feature of a small region output in the past, the processing unit compresses and outputs the predetermined feature or the feature of the small region output in the past to the storage unit.

A second aspect of the present disclosure is an image processing method of an image processing device including a neural network including convolution processing for an image, the image processing method including acquiring, by an acquisition unit, a target image to be processed, and processing, by a processing unit, the target image using the neural network including convolution processing, in which when an output feature map constituting an output of the convolution processing is output, the processing unit outputs, to a storage unit, respective small regions dividing the output feature map, and when each of the small regions is output to the storage unit, in a case in which a feature included in the small region is the same as a predetermined feature or a feature of a small region output in the past, the processing unit compresses and outputs the predetermined feature or the feature of the small region output in the past to the storage unit.

A third aspect of the present disclosure is an image processing program for causing a computer including a neural network including convolution processing for an image to execute acquiring a target image to be processed, and processing the target image using the neural network including convolution processing, in which when an output feature map constituting an output of the convolution processing is output, respective small regions dividing the output feature map are output to a storage unit, and when each of the small regions is output to the storage unit, in a case in which a feature included in the small region is the same as a predetermined feature or a feature of a small region output in the past, the predetermined feature or the feature of the small region output in the past is compressed and output to the storage unit.

### Advantageous Effects of Invention

According to the disclosed technology, the data size at the time of outputting an output feature map can be suppressed.

### Brief Description of Drawings

Fig. 1 is a diagram for describing a small region of an input feature map.
Fig. 2 is a diagram for describing a method of skipping convolution processing for a small region of the input feature map.
Fig. 3 is a schematic block diagram of an example of a computer functioning as an image processing device of a first embodiment and a second embodiment.
Fig. 4 is a block diagram illustrating a functional configuration of an image processing device of the first embodiment and the second embodiment.
Fig. 5 is a block diagram illustrating a functional configuration of a learning unit of the image processing device of the first embodiment and the second embodiment.
Fig. 6 is a block diagram illustrating a functional configuration of an inference unit of the image processing device of the first embodiment and the second embodiment.
Fig. 7 is a flowchart illustrating a flow of learning processing of the first embodiment and the second embodiment.
Fig. 8 is a flowchart illustrating a flow of convolution processing in the learning processing and image processing according to the first embodiment and the second embodiment.
Fig. 9 is a flowchart illustrating a flow of the image processing of the first embodiment and the second embodiment.
Fig. 10A is a diagram illustrating an example of a small region using 4-bit data.
Fig. 10B is a diagram illustrating an example of a small region using 6-bit data.
Fig. 11 is a diagram for describing a method of performing convolution processing on a plurality of small regions in parallel.
Fig. 12 is a diagram for describing a method of skipping convolution processing for a small region of an input feature map in a modification.
Fig. 13 is a diagram for describing a method of skipping convolution processing for a small region of an input feature map in a modification.
Fig. 14 is a diagram for describing a method of skipping convolution processing for a small region of an input feature map in a modification.
Fig. 15 is a diagram for describing a method of compressing and outputting an output feature map to a RAM.
Fig. 16 is a diagram illustrating an example of a small region of an output feature map.
Fig. 17 is a diagram illustrating an example of a small region having an overlapping region in an output feature map.
Fig. 18 is a diagram illustrating an example of a small region having no overlapping region in an output feature map.
Fig. 19 is a diagram illustrating an example of a same value flag, a continuous flag, and output data for a small region that is not a small region of the same value and is not a continuously same small region.
Fig. 20 is a diagram illustrating an example of a same value flag, a continuous flag, and output data for a small region of the same value.
Fig. 21 is a diagram illustrating an example of a same value flag, a continuous flag, and output data for a continuously same small region.
Fig. 22 is a flowchart illustrating a flow of convolution processing in learning processing and image processing according to a third embodiment.
Fig. 23 is a diagram illustrating an example of convolution processing.
Fig. 24 is a diagram illustrating an example of convolution processing.
Fig. 25 is a diagram illustrating an example of convolution processing for each small region.
Fig. 26 is a diagram illustrating an example of a small region of an input feature map.
Fig. 27A is a diagram illustrating an example of a small region of an input feature map.
Fig. 27B is a diagram illustrating an example of a small region of an input feature map.

### Description of Embodiments

Hereinafter, examples of an embodiment of the disclosed technology will be described with reference to the drawings. Note that in the drawings, the same or equivalent components and parts are denoted by the same reference signs. Dimensional ratios in the drawings are exaggerated for convenience of description, and may be different from actual ratios.

### <Overview of embodiment of disclosed technology>

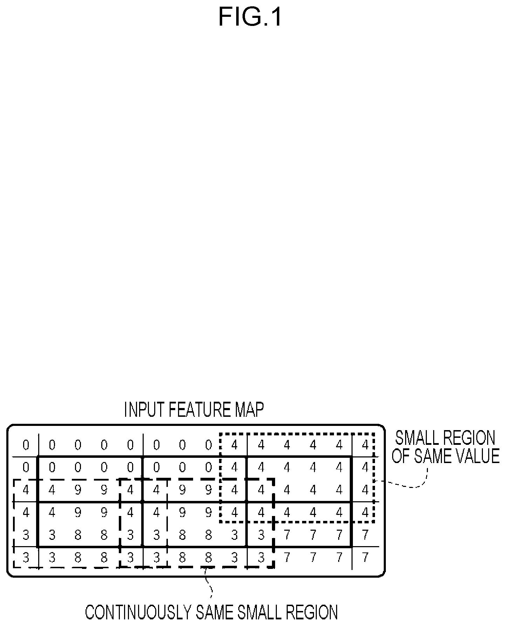

**In** the disclosed technology, after data of an input feature map of the convolution layer is read from a random access memory (RAM) or the like, it is determined for each small region whether all features in the small region are the same value and whether all features in the small region are continuously the same. Hereinafter, a small region of an input feature map in which all features are the same value is referred to as a "small region of the same value". Furthermore, a small region in which features in the small region are completely the same as the previous small region is referred to as a "continuously same small region". As an example of the "small region of the same value", Fig. 1 illustrates an example in which all features in a small region surrounded by the dotted line are 4. Furthermore, as an example of "continuously same small region", an example is illustrated in which features in a small region surrounded by a thin broken line and features in a small region surrounded by a thick broken line are the same. Here, the reason why it is determined whether a region is a small region having the same value is that an input image often has the same values. Furthermore, the reason why it is determined whether a region is a continuously same small region is that similar regions are often continued in an input image. For example, there is a case where the value of 10 points in the upper first row of a 10 × 6 region of the input image is 10 and the value of 50 points in the lower third row is 12. Both the region having the same value and the continuously same small region apply to a case where the input image is not a region of a complicated picture but a flat and uniform region.

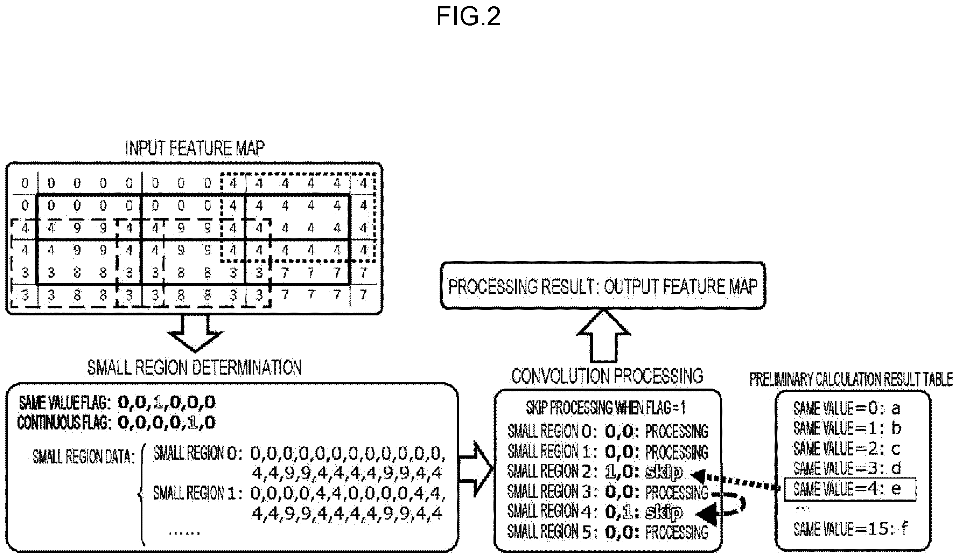

Furthermore, as illustrated in Fig. 2, a same value flag indicating the determination result for each small region of whether or not the region is a small region of the same value, a continuous flag indicating the determination result for each small region of whether or not the region is a continuously same small region, and small region data that is data of each small region of the input feature map are input to an arithmetic circuit that performs convolution processing.

In the arithmetic circuit, in a case where the small region to be processed is a small region of the same value or a continuously same small region, the processing is skipped and convolution processing is not performed. In a case where the region is a continuously same small region, the processing result is the same as the small region that has been processed immediately before. Therefore, it is only necessary to continuously output the processing result of the small region that has been processed immediately before, and the processing speed is increased. Fig. 2 illustrates an example in which processing is skipped for small region 4 because features in the small region 3 and features in the small region 4 are the same.

Furthermore, the processing result is limited for a small region of the same value. In a case where the value indicating the feature is 4 bits, the processing result is 16 patterns, and in a case where the value indicating the feature is 8 bits, the processing result is 256 patterns. Processing results of all patterns are calculated in advance and a preliminary calculation result table is stored in the RAM, and the preliminary calculation result table is read from the RAM to an internal memory of the arithmetic circuit for each processing of each layer. As a result, since the processing result can be obtained only by referring to the internal memory without performing the convolution processing on a small region of the same value, the processing speed is increased. Fig. 2 illustrates an example in which, since small region 2 is a small region of the same value, processing is skipped for small region 2, and the processing result in a case where all features are 4 stored in the preliminary calculation result table is referred to and output.

Furthermore, as illustrated in Fig. 2, an output feature map that is a result of convolution processing by the arithmetic circuit is written out to a RAM or the like. The written output feature map is used as an input feature map in subsequent layers, and the above-described determination processing and convolution processing using the processing skip are repeated again.

### [First Embodiment]

### <Configuration of image processing device according to first embodiment>

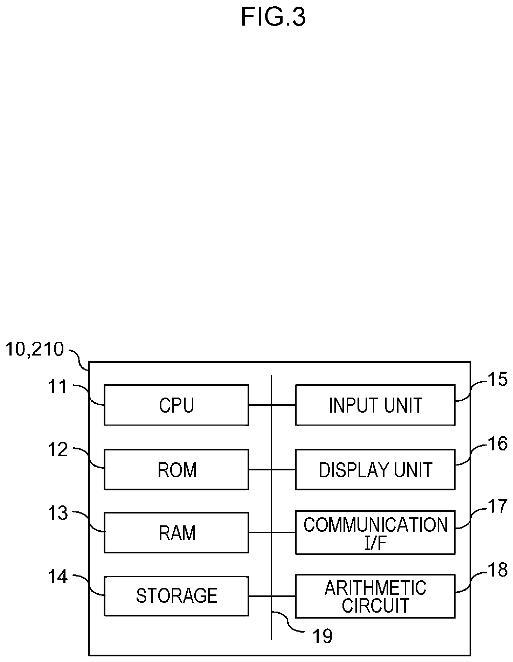

Fig. 3 is a block diagram illustrating a hardware configuration of an image processing device 10 of the first embodiment.

As illustrated in Fig. 3, the image processing device 10 includes a central processing unit (CPU) 11, a read only memory (ROM) 12, a RAM 13, a storage 14, an input unit 15, a display unit 16, a communication interface (I/F) 17, and an arithmetic circuit 18. The configurations are connected to each other to be able to communicate via a bus 19.

The CPU 11 is a central processing unit that executes various programs and controls each unit. That is, the CPU 11 reads a program from the ROM 12 or the storage 14 and executes the program using the RAM 13 as a working area. The CPU 11 controls each of the foregoing configurations and executes various types of arithmetic processing according to the program stored in the ROM 12 or the storage 14. In the present embodiment, the ROM 12 or the storage 14 stores a learning processing program for performing learning processing of a neural network and an image processing program for performing image processing using the neural network. The learning processing program and the image processing program may be one program or a program group including a plurality of programs or modules.

The ROM 12 stores various programs and various types of data. The RAM 13 temporarily stores a program or data as a working area. The storage 14 includes a hard disk drive (HDD) or a solid state drive (SSD) and stores various programs including an operating system and various types of data.

The input unit 15 includes pointing devices such as a mouse and a keyboard and is used to execute various inputs.

The input unit 15 receives learning data for learning the neural network as an input. For example, the input unit 15 receives, as an input, learning data including a target image to be processed and a processing result of the target image obtained in advance.

Furthermore, the input unit 15 receives a target image to be processed as an input.

The display unit 16 is, for example, a liquid crystal display, and displays various types of information including a processing result. The display unit 16 may function as the input unit 15 by employing a touchscreen system.

The communication interface 17 is an interface for communicating with another device. For example, standards such as Ethernet (registered trademark), **FDDI,** and Wi-Fi (registered trademark) are used.

The arithmetic circuit 18 executes convolution processing in the convolution layer of the neural network. Specifically, the arithmetic circuit 18 receives a small region of the input feature map and a kernel, and outputs a small region of the output feature map, which is a result of convolution processing of each point in the small region.

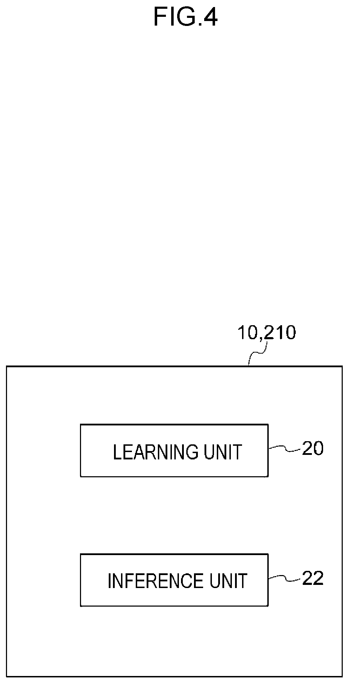

Next, a functional configuration of the image processing device 10 will be described. Fig. 4 is a block diagram illustrating an example of a functional configuration of the image processing device 10.

The image processing device 10 functionally includes a learning unit 20 and an inference unit 22 as illustrated in Fig. 4.

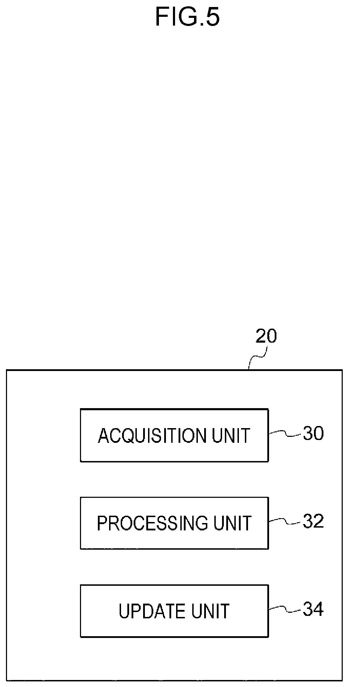

As illustrated in Fig. 5, the learning unit 20 includes an acquisition unit 30, a processing unit 32, and an update unit 34.

The acquisition unit 30 acquires an input target image and processing result of learning data.

The processing unit 32 processes the target image of the learning data using a neural network including convolution processing. When performing the convolution processing, the processing unit 32 performs the convolution processing for each small region obtained by dividing the input feature map to be an input of the convolution processing. The convolution processing for each small region is executed using the arithmetic circuit 18. At this time, the small region data of the input feature map and the kernel are input to the arithmetic circuit 18, and the output feature map representing the result of the convolution processing for each small region is output from the arithmetic circuit 18.

Here, the input feature map is divided into small regions as illustrated in Fig. 1. In Fig. 1 described above, a region corresponding to a small region of the output feature map is displayed by the thick line frame, and a small region of the input feature map is a region including a small region of the corresponding output feature map and overlapping regions overlapping an adjacent small region. As described above, the small region obtained by dividing the input feature map includes an overlapping region overlapping adjacent small regions and having an overlapping region corresponding to the kernel size of the convolution processing. Note that the division of the small region is determined at the time of design. For example, the division may be determined by a balance between a hardware constraint (size or power) and desired throughput (xxfps or the like). When the kernel size is 3 × 3, the small region of the input feature map is 10 × 6, and the small region of the output feature map is 8 × 4, throughput capable of simultaneously outputting 32 points is obtained. At this time, 288 (= (3 × 3) × 8 × 4) product-sum operation circuits are required. Furthermore, if the small region of the input feature map is set to 6 × 4 and the small region of the output feature map is set to 4 × 2, throughput at which only eight points are simultaneously output is obtained. At this time, 72 product-sum operation circuits (= (3 × 3) × 4 × 2) are required. Furthermore, in a case where the product-sum operation is achieved by hardware, since the division of the small region is determined at the time of design, the division of the small region does not change depending on the layer.

When performing the convolution processing for each small region, the arithmetic circuit 18 does not perform convolution processing for the small region in a case where all the features included in the small region have the same value, and outputs a result processed for a case where all the features included in a small region have the same value determined in advance as a result of processing the small region.

Specifically, the processing unit 32 determines, for each small region, whether or not all the features included in the small region have the same value. In a case where it is determined that all the features included in the small region have the same value, the arithmetic circuit 18 does not perform convolution processing on the small region, and outputs a result processed for a case where all the features included in a small region have the same value stored in the preliminary calculation result table as a result of processing the small region.

Furthermore, when performing the convolution processing for each small region, in a case where features included in the small region are the same as features of the small region processed immediately before, the arithmetic circuit 18 does not perform convolution processing for the small region, and outputs a result of processing for the small region processed immediately before as a result of processing the small region.

Specifically, the processing unit 32 determines, for each small region, whether or not features included in the small region are the same as features of a small region processed immediately before. In a case where it is determined that features included in the small region are the same as features of the small region processed immediately before, the arithmetic circuit 18 does not perform convolution processing on the small region, and outputs a result of processing on the small region processed immediately before as a result of processing the small region.

The update unit 34 updates the parameter of the neural network so that the result of processing on the target image using the neural network matches the processing result obtained in advance. Furthermore, the update unit 34 updates the preliminary calculation result table of each convolution layer on the basis of the updated parameter of the neural network.

Processing of each of the processing unit 32 and the update unit 34 is repeatedly performed until a predetermined repetition end condition is satisfied. As a result, the neural network is learned.

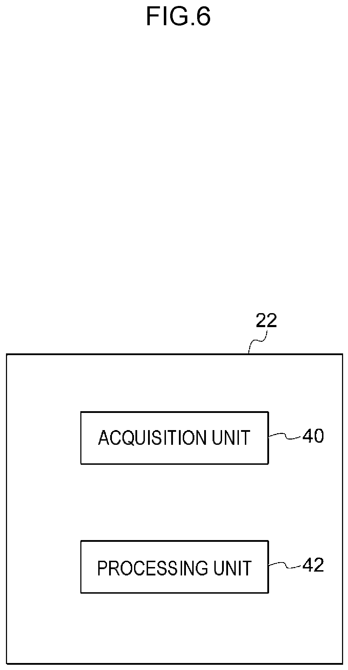

As illustrated in Fig. 6, the inference unit 22 includes an acquisition unit 40 and a processing unit 42.

The acquisition unit 40 acquires the input target image to be processed.

The processing unit 42 processes the target image using a neural network including convolution processing. When performing the convolution processing, the processing unit 42 performs the convolution processing for each small region obtained by dividing the input feature map to be an input of the convolution processing. The convolution processing for each small region is executed using the arithmetic circuit 18. At this time, the small region data of the input feature map and the kernel are input to the arithmetic circuit 18, and the output feature map representing the result of the convolution processing for each small region is output from the arithmetic circuit 18.

Similarly to the processing unit 32, the processing unit 42 determines, for each small region, whether or not all the features included in the small region have the same value. In a case where it is determined that all the features included in the small region have the same value, the arithmetic circuit 18 does not perform convolution processing on the small region, and outputs a result processed for a case where all the features included in a small region have the same value stored in the preliminary calculation result table as a result of processing the small region.

Furthermore, similarly to the processing unit 32, the processing unit 42 determines whether or not features included in the small region are the same as features of the small region processed immediately before. In a case where it is determined that features included in the small region are the same as features of the small region processed immediately before, the arithmetic circuit 18 does not perform convolution processing on the small region, and outputs a result of processing on the small region processed immediately before as a result of processing the small region.

A result of processing the target image using the neural network is displayed by the display unit 16.

### <Operation of image processing device according to first embodiment>

Next, an operation of the image processing device 10 according to the first embodiment will be described.

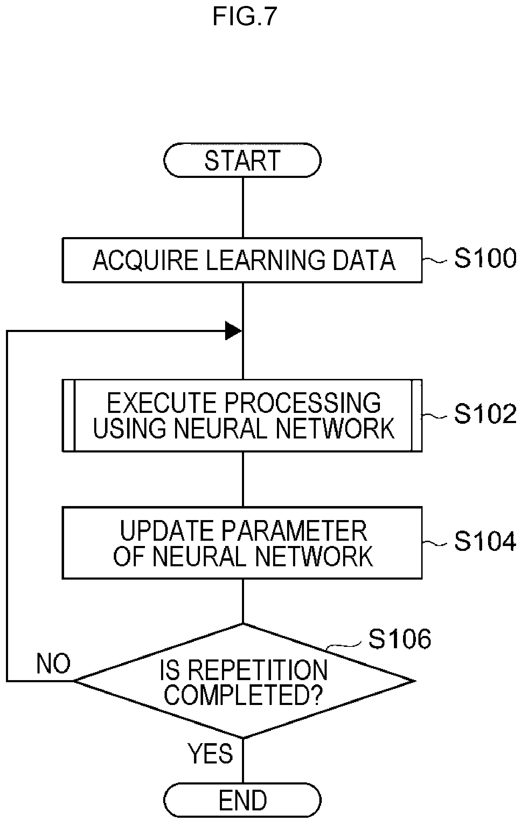

Fig. 7 is a flowchart illustrating a flow of learning processing by the image processing device 10. Learning processing is performed by the CPU 11 reading a learning processing program from the ROM 12 or the storage 14, loading the learning processing program in the RAM 13, and executing the learning processing program. Furthermore, learning data is input to the image processing device 10.

In step S100, the CPU 11, as the acquisition unit 30, acquires an input target image to be processed and processing result of the learning data.

In step S102, the CPU 11, as the processing unit 32, processes the target image of the learning data using a neural network including convolution processing.

In step S104, the CPU 11, as the update unit 34, updates the parameter of the neural network so that the result of processing on the target image of the learning data using the neural network matches the processing result obtained in advance, and updates the preliminary calculation result table.

In step S106, the CPU 11 determines whether or not a predetermined repetition end condition is satisfied. If the repetition end condition is not satisfied, the processing returns to step S102 described above, and processing of each of the processing unit 32 and the update unit 34 is repeatedly performed. As a result, the neural network is learned.

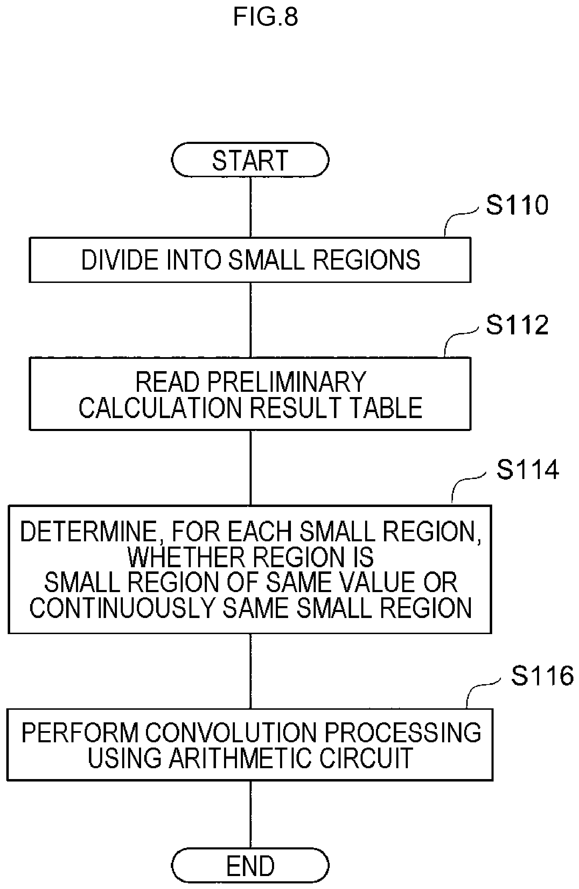

In step S102 described above, arithmetic processing of each layer of the neural network is performed. Here, the arithmetic processing of the convolution layer is achieved by a processing routine illustrated in Fig. 8.

In step S110, the CPU 11, as the processing unit 32, divides the input feature map to be an input of the convolution layer into small regions.

In step S112, the CPU 11, as the processing unit 32, reads the preliminary calculation result table of the convolution layer from the RAM 13.

In step S114, the CPU 11, as the processing unit 32, sequentially sets the divided small regions as processing targets, and determines whether features included in the processing target small region are the same value or the same as features of the small region processed immediately before.

In step S116, the CPU 11, as the processing unit 32, outputs each small region data of the input feature map, the preliminary calculation result table, and the same value flag and the continuous flag indicating the determination result in step S114 described above to the arithmetic circuit 18. Then, the arithmetic circuit 18 performs convolution processing for each small region. At this time, in a case where the small region to be processed is not a small region of the same value and is not a continuously same small region, the arithmetic circuit 18 performs convolution processing on the small region to be processed. In a case where the small region to be processed is a small region of the same value, the arithmetic circuit 18 does not perform convolution processing on the small region to be processed, and outputs a result processed for a case where features included in a small region have the same value stored in the preliminary calculation result table as a result of processing the small region to be processed.

Furthermore, in a case where the small region to be processed is a continuously same small region, the arithmetic circuit 18 does not perform convolution processing on the small region to be processed, and outputs a result of processing on the small region processed immediately before as a result of processing the small region to be processed.

Then, the processing routine is ended, and an output feature map including a processing result for each small region is output as an input feature map of the next layer.

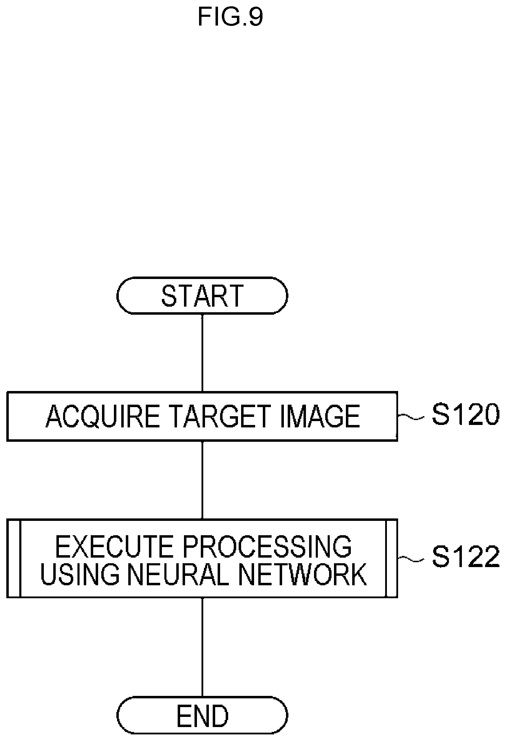

Fig. 9 is a flowchart illustrating a flow of image processing by the image processing device 10. Image processing is performed by the CPU 11 reading an image processing program from the ROM 12 or the storage 14, loading the image processing program in the RAM 13, and executing the image processing program. Furthermore, a target image is input to the image processing device 10.

In step S120, the CPU 11, as the acquisition unit 40, acquires the input target image.

In step S122, the CPU 11, as the processing unit 42, processes the target image using the neural network learned by the above-described learning processing. Then, a result of processing the target image using the neural network is displayed by the display unit 16.

In step S122 described above, arithmetic processing of each layer of the neural network is performed. Here, the arithmetic processing of the convolution layer is achieved by the processing routine illustrated in Fig. 8.

As described above, when performing convolution processing for each small region of the input feature map, the image processing device according to the first embodiment does not perform convolution processing for the small region when features included in the small region have the same value or are the same as the features of the small region processed immediately before, and outputs the result of processing on a small region of the same value determined in advance or the result of processing immediately before as the result of processing on the small region. As a result, processing using a neural network including convolution processing can be speeded up.

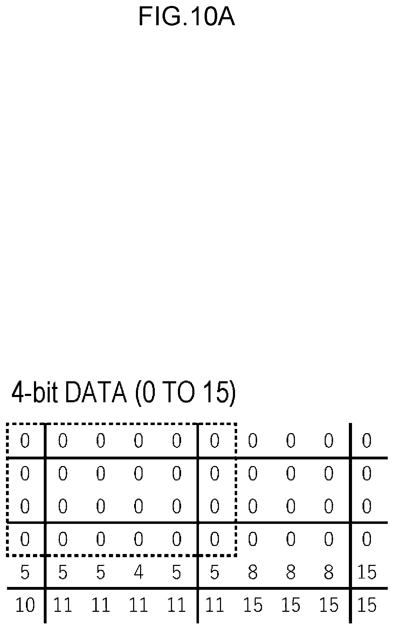

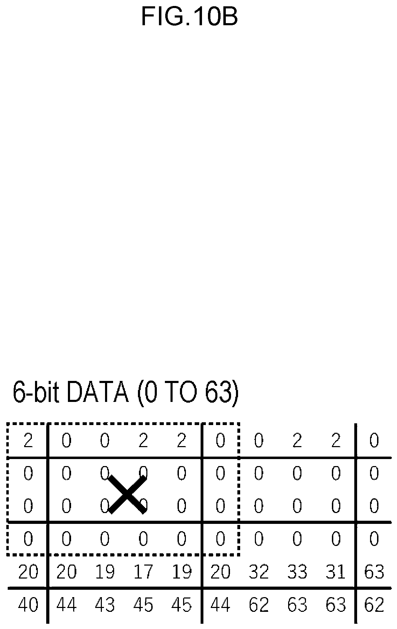

In a case where the size of the small region obtained by dividing the input feature map is increased in order to improve throughput, or in a case where the bit depth representing the input feature map is increased in order to improve the CNN calculation accuracy, in the conventional method, there are less cases where all the values inside the small region are 0, and the calculation cannot be speeded up in many cases. For example, as illustrated in Fig. 10A, in a case where features of the input feature map are represented by 4-bit data, all the values inside the small region are 0, whereas, as illustrated in Fig. 10B, in a case where features of the input feature map are represented by 6-bit data, the values inside the small regions are not all 0. On the other hand, in the present embodiment, in a small region of the same value or a continuously same small region, a sufficient calculation speedup can be expected as compared with the conventional method.

### [Second Embodiment]

A second embodiment is different from the first embodiment in that convolution processing is performed in parallel on a plurality of small regions in an arithmetic circuit.

### <Overview of second embodiment>

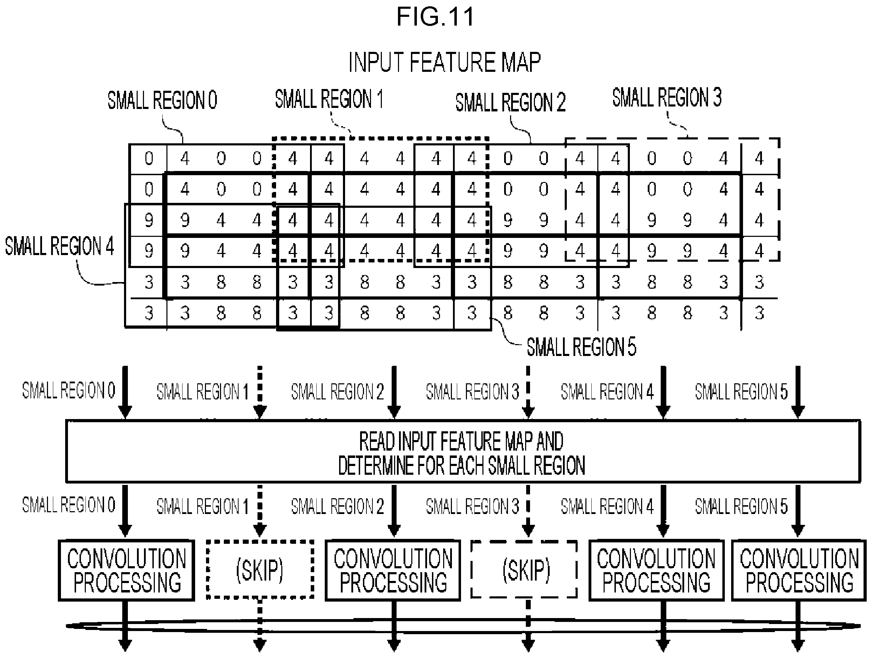

In the second embodiment, as illustrated in Fig. 11, an arithmetic circuit performs convolution processing on a plurality of small regions of an input feature map in parallel. Fig. 11 illustrates an example in which the arithmetic circuit sets the size of the small region of the input feature map to 6 × 4, performs convolution processing on the four small regions in parallel, and simultaneously outputs the results of the convolution processing at 32 points.

At this time, for each small region, it is determined whether the region is a small region of the same value or is a continuously same small region. In the example of Fig. 11, small region 1 is a small region of the same value, small region 3 is a continuously same small region, and convolution processing of small region 1 and small region 3 is skipped. Furthermore, convolution processing is performed on small region 0, small region 2, small region 4, and small region 5 in parallel, and as a result, processing results for six small regions are obtained at a time.

In this manner, by determining whether each small region is a small region of the same value or is a continuously same small region, and performing convolution processing on a plurality of small regions in parallel using an arithmetic circuit, it is possible to increase the probability that a region is a small region of the same value and the probability that a region is a continuously same small region, and to increase the probability of skipping the convolution processing.

### <Configuration of image processing device according to second embodiment>

An image processing device of the second embodiment will be described. Parts having configurations similar to those of the first embodiment are denoted by the same reference numerals, and description thereof is omitted.

The hardware configuration of an image processing device 210 of the second embodiment is similar to the hardware configuration of the image processing device 10 illustrated in Fig. 3 described above.

An arithmetic circuit 18 of the image processing device 210 receives small region data of the input feature map and a kernel, repeatedly performs convolution processing on a predetermined number of small regions in parallel, and outputs the output feature map that is a result of convolution processing of each point in each small region.

A processing unit 32 of a learning unit 20 processes the target image of the learning data using a neural network including convolution processing. When performing the convolution processing, the processing unit 32 performs the convolution processing for each small region obtained by dividing the input feature map to be an input of the convolution processing. The convolution processing for each small region is executed using the arithmetic circuit 18. At this time, the processing unit 32 determines, for each small region, whether or not the region is a small region of the same value, and whether or not the region is a continuously same small region. The small region data of the input feature map, the kernel, the determination result for each small region, and the preliminary calculation result table are input to the arithmetic circuit 18, and the output feature map is output from the arithmetic circuit 18.

Specifically, when performing the convolution processing, the processing unit 32 determines whether or not all features included in the small region have the same value for each small region. In a case where it is determined that all the features included in the small region have the same value, the arithmetic circuit 18 does not perform convolution processing on the small region, and outputs a result processed for a case where all the features included in a small region have the same value stored in the preliminary calculation result table as a result of processing the small region.

Furthermore, the processing unit 32 determines, for each small region, whether or not features included in the small region are the same as features of a small region processed immediately before. In a case where it is determined that features included in the small region are the same as features of the small region processed immediately before, the arithmetic circuit 18 does not perform convolution processing on the small region, and outputs a result of processing on the small region processed immediately before as a result of processing the small region.

Furthermore, the arithmetic circuit 18 performs convolution processing in parallel for a predetermined number of small regions in which all the features included in the small region are not the same value and are not the same as the features of the small region processed immediately before.

The output feature map that is the result of the convolution processing performed for each small region as described above is an input to the next layer of the neural network.

Similarly to the processing unit 32, a processing unit 42 of an inference unit 22 processes the target image using a neural network including convolution processing. When performing the convolution processing, the processing unit 42 performs the convolution processing for each small region obtained by dividing the input feature map to be an input of the convolution processing. The convolution processing for each small region is executed using the arithmetic circuit 18. At this time, the processing unit 42 determines, for each small region, whether or not the region is a small region of the same value, and whether or not the region is a continuously same small region. The small region data of the input feature map, the kernel, the determination result for each small region, and the preliminary calculation result table are input to the arithmetic circuit 18, and the output feature map is output from the arithmetic circuit 18.

Specifically, similarly to the processing unit 32, the processing unit 42 determines whether or not all features included in the small region have the same value for each small region when performing the convolution processing. In a case where it is determined that all the features included in the small region have the same value, the arithmetic circuit 18 does not perform convolution processing on the small region, and outputs a result processed for a case where all the features included in a small region have the same value stored in the preliminary calculation result table as a result of processing the small region.

Furthermore, similarly to the processing unit 32, the processing unit 42 determines, for each small region, whether or not features included in the small region are the same as features of the small region processed immediately before. In a case where it is determined that features included in the small region are the same as features of the small region processed immediately before, the arithmetic circuit 18 does not perform convolution processing on the small region, and outputs a result of processing on the small region processed immediately before as a result of processing the small region.

Furthermore, the arithmetic circuit 18 performs convolution processing in parallel for a predetermined number of small regions in which all the features included in the small region are not the same value and are not the same as the features of the small region processed immediately before.

The output feature map that is the result of the convolution processing performed for each small region as described above is an input to the next layer of the neural network.

### <Operation of image processing device according to second embodiment>

Next, an operation of the image processing device 210 according to the second embodiment will be described.

Processing similar to the learning processing illustrated in Fig. 7 is performed by a CPU 11 of the image processing device 210 reading a learning processing program from a ROM 12 or a storage 14, loading the learning processing program in a RAM 13, and executing the learning processing program. Furthermore, learning data is input to the image processing device 210.

In step S102 described above, arithmetic processing of each layer of the neural network is performed. Here, the arithmetic processing of the convolution layer is achieved by the processing routine illustrated in Fig. 8.

In step S116, in a case where features included in the small region to be processed are the same value, the arithmetic circuit 18 does not perform convolution processing on the small region to be processed, and outputs a result processed for a case where features included in a small region have the same value stored in the preliminary calculation result table as a result of processing the small region to be processed.

Furthermore, in a case where features included in the small region to be processed is the same as features of the small region processed immediately before, the arithmetic circuit 18 does not perform convolution processing on the small region to be processed, and outputs a result of processing on the small region processed immediately before as a result of processing the small region to be processed.

Furthermore, the arithmetic circuit 18 performs convolution processing in parallel on a predetermined number of small regions in which all the features included in the small region are not the same value and are not the same as the features of the small region processed immediately before.

Processing similar to the image processing illustrated in Fig. 9 is performed by the CPU 11 of the image processing device 210 reading an image processing program from the ROM 12 or the storage 14, loading the image processing program in the RAM 13, and executing the image processing program. Furthermore, a target image is input to the image processing device 210.

In step S122 described above, arithmetic processing of each layer of the neural network is performed. Here, the arithmetic processing of the convolution layer is achieved by the processing routine illustrated in Fig. 8.

Note that other configurations and operations of the image processing device 210 of the second embodiment are similar to those of the first embodiment, and thus, description thereof is omitted.

As described above, in the image processing device according to the second embodiment, the arithmetic circuit is configured to perform convolution processing on a plurality of small regions in parallel, and when performing the convolution processing for each small region of the input feature map, the image processing device does not perform convolution processing for the small region when features included in the small region have the same value or are the same as the features of the small region processed immediately before, outputs the result of processing on a small region of the same value determined in advance or the result of processing immediately before as the result of processing on the small region. As a result, even in a case where the bit depth or the parallel processing unit is large and skipping of convolution processing for a small region in which values of all features are zero cannot be expected, the speed increase by the processing skip can be expected without lowering the calculation accuracy or throughput.

Note that the present invention is not limited to the device configuration and the operational effects of the above-described embodiments, and various modifications and applications can be made without departing from the gist of the invention.

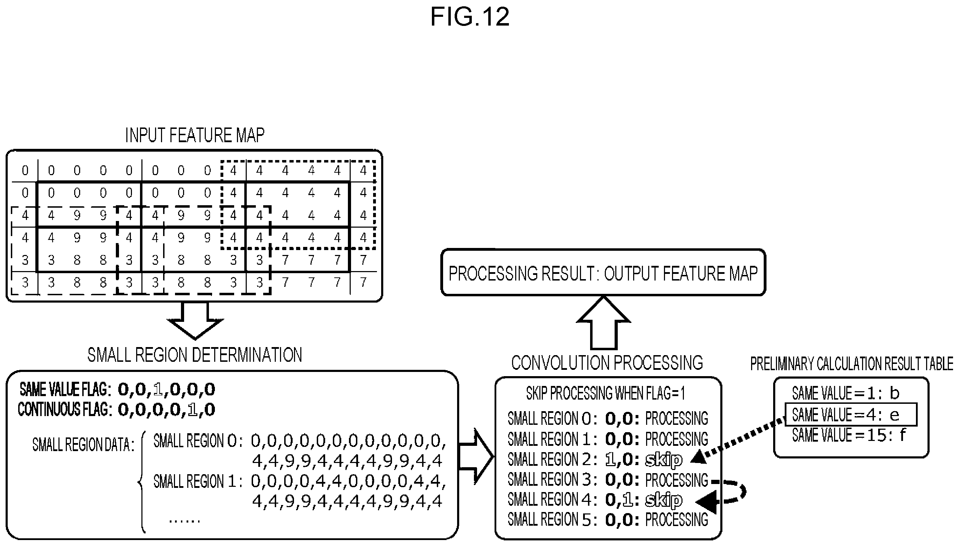

For example, the case where the processing result is calculated in advance for all of the values (for example, if the feature is represented by 4-bit data, 16 values) for the small region of the same value and stored in the memory has been described as an example, but the present invention is not limited thereto. A value of a feature having a high probability of appearing as a small region of the same value may be determined in advance by performing simulation or the like, and the processing result for the small region of the same value may be obtained in advance only for values of top several features having a high appearance probability and be stored in the preliminary calculation result table (see Fig. 12). In the case of a small region of the same value whose processing result is obtained in advance, the processing result obtained in advance is output without performing convolution processing. Fig. 12 illustrates an example in which the processing result is obtained in advance only for a small region of the same value in which the value of the feature is 1, a small region of the same value in which the value of the feature is 4, and a small region of the same value in which the value of the feature is 15. Furthermore, since the processing result is 0 for the small region of the same value in which the value of the feature is 0, the small region is not stored in the preliminary calculation result table. As a result, the size of the preliminary calculation result table in which the processing result obtained in advance is stored can be reduced, leading to reduction of the memory amount of hardware.

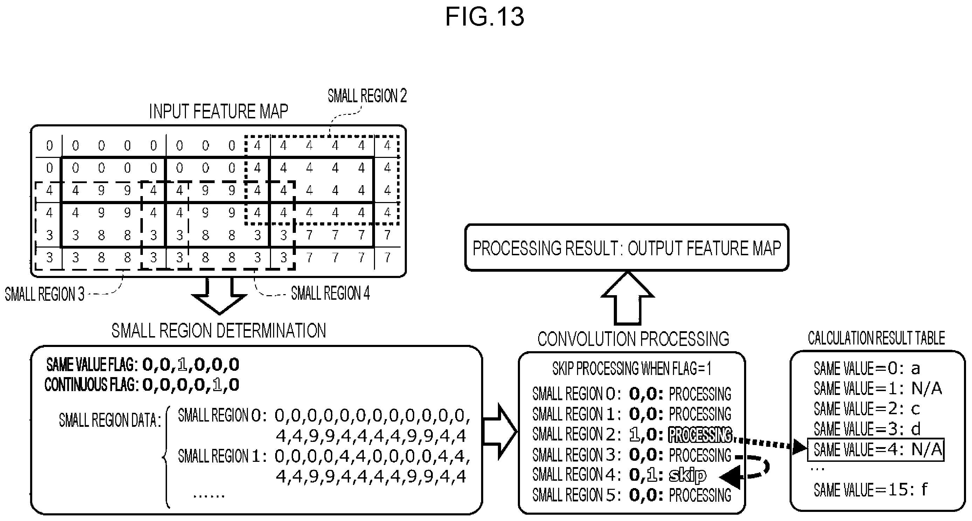

Furthermore, the case where the processing result is calculated in advance for all of the values (for example, if the feature is represented by 4-bit data, 16 values) for the small region of the same value and stored in the memory has been described as an example, but the present invention is not limited thereto. When a small region of the same value in which the value of the feature is a certain value appears for the first time, convolution processing may be performed and the processing result may be stored in the calculation result table, and when a small region of the same value in which the value of the feature is the certain value appears for the second and subsequent times, the processing result may be read from the calculation result table without performing convolution processing (see Fig. 13). Fig. 13 illustrates an example in which, in small region 2, a small region of the same value in which the value of the feature is 4 appears for the first time, convolution processing is performed, and the processing result is stored in the calculation result table. In this example, when the small region of the same value in which the value of the feature is 4 appears for the second and subsequent times, the processing result is read from the calculation result table without performing convolution processing. Furthermore, the calculation result table is reset each time each layer is processed. As a result, the labor of preliminary calculation processing can be eliminated. Furthermore, since it is not necessary to transfer the preliminary calculation result of each layer from the RAM or the like to the internal memory of the arithmetic circuit for each layer, it is possible to reduce the amount of data transferred to the RAM or the like.

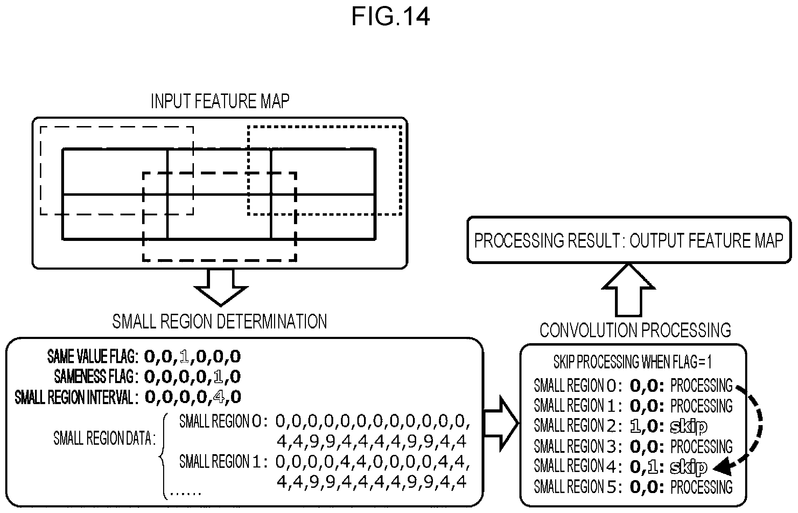

Furthermore, the case of determining whether or not a region is a continuously same small region has been described as an example, but the present invention is not limited thereto. For example, it may be determined whether or not the small region is the same as a small region processed a few regions earlier, and in a case where the small region is the same as a small region processed a few regions earlier, the processing result of the small region processed a few regions earlier may be output without performing convolution processing (see Fig. 14). Fig. 14 illustrates an example in which it is determined that small region 4 is the same as small region 1 using a sameness flag indicating whether or not a region is the same as a small region processed a few regions earlier, and also a small region interval parameter indicating how many regions earlier the same small region exists, and the same processing result as small region 1 is output without performing convolution processing. In this case, it is necessary to set the upper limit of the small region interval and to store the processing results of the small regions for the upper limit small region interval in the internal memory of the arithmetic circuit. As a result, the probability that the processing can be skipped increases, and thus, speedup can be expected.

### [Third Embodiment]

A third embodiment is different from the first embodiment in that a result of convolution processing by an arithmetic circuit is compressed and stored in a RAM.

### <Overview of third embodiment>

Since a feature map in convolution processing often has an enormous data size, a data transfer amount when reading and writing the feature map from and to a memory such as a RAM is large. Waiting for data transfer from the memory often becomes a bottleneck in processing using the CNN, and not only a reduction in the amount of calculation but also a reduction in data size are required to improve CNN processing performance.

In particular, in the first embodiment, the operation amount is reduced by a processing skip, but the transfer amounts of reading and writing from and to the memory do not change, and thus there is a possibility that a gap between the two increases.

Therefore, in the third embodiment, by diverting the determination result as to whether the region is a small region of the same value or a continuously same small region for reducing the calculation amount, the feature map is compressed according to the determination result as to whether the region is a small region of the same value or a continuously same small region without adding new determination processing or a flag.

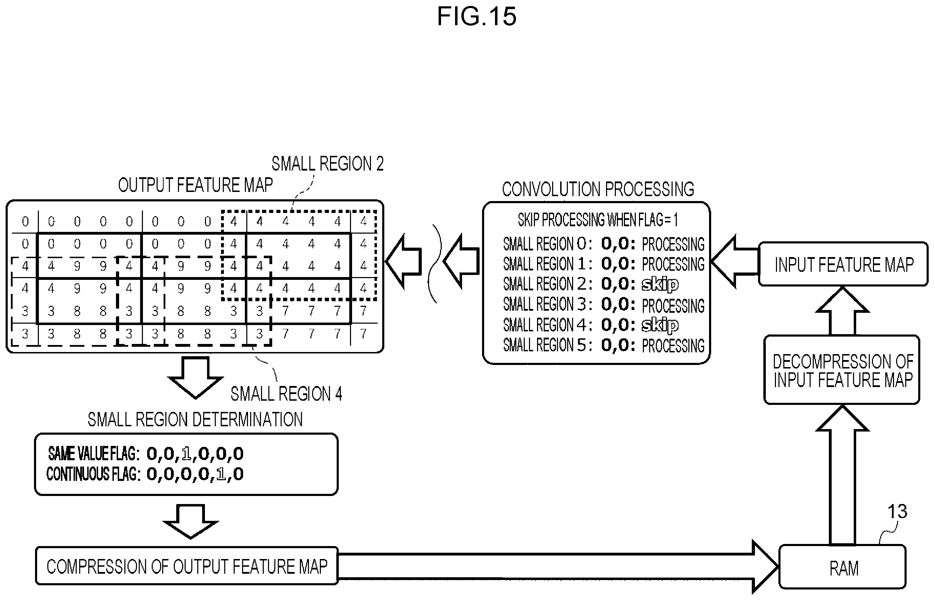

Specifically, as illustrated in Fig. 15, before the output feature map of convolution processing is output to the RAM 13, it is determined whether the output feature map is a small region of the same value or a continuously same small region, instead of determining whether the input feature map of convolution processing is a small region of the same value or a continuously same small region as in the first embodiment. Furthermore, flags indicating the determination result are output to the RAM 13 together with the output feature map.

In normal convolution processing, since the output feature map of the convolution processing of the previous layer is the input feature map of the layer, determining whether the output feature map of the previous layer is a small region of the same value or a continuously same small region is the same as determining whether the input feature map of the layer is a small region of the same value or a continuously same small region, and there is no influence as a processing result. Furthermore, in the ROUTE layer or the like, even in a case where the output feature map several layers before is set as the input feature map of the layer, there is no influence as a processing result.

Therefore, in the present embodiment, it is determined whether the output feature map is a small region of the same value or a continuously same small region, output feature map compression processing is performed using the determination result, and the compressed output feature map is output to the RAM 13.

When convolution processing of the next layer is performed, the compressed output feature map stored in the RAM 13 is read and decompressed into the input feature map, and then the convolution processing is performed.

In Fig. 15, the size of the small region of the output feature map is set to 6 × 4, and it is determined whether each small region is a small region of the same value or a continuously same small region. In the example of Fig. 15, small region 2 is a small region of the same value, small region 4 is a continuously same small region, and data of small region 2 and data of small region 4 are compressed and stored in the RAM 13. Furthermore, in the next layer, the compressed output feature map read from the RAM 13 is decompressed into the input feature map, and convolution processing of small region 2 and small region 4 is skipped when convolution processing is performed for each small region.

In this manner, for each small region of the output feature map, it is determined whether the region is a small region of the same value or a continuously same small region, the compressed output feature map obtained by compressing data of the small region determined as a small region of the same value or a continuously same small region is stored in the RAM 13, and the compressed output feature map is read from the RAM 13 and decompressed into the input feature map at the time of the convolution processing of the next layer. As a result, it is possible to suppress the data transfer amount when reading and writing from and to the RAM 13.

Furthermore, in the convolution processing of the next layer, convolution processing of the small region determined to be a small region of the same value or a continuously same small region is skipped, and thus the convolution processing is speeded up.

### <Configuration of image processing device according to third embodiment>

An image processing device of the third embodiment will be described. Parts having configurations similar to those of the first embodiment are denoted by the same reference numerals, and description thereof is omitted.

The hardware configuration of an image processing device 310 of the third embodiment is similar to the hardware configuration of the image processing device 10 illustrated in Fig. 3 described above.

A processing unit 32 of a learning unit 20 processes the target image of the learning data using a neural network including convolution processing. When outputting the output feature map to be an output of convolution processing, the processing unit 32 outputs the output feature map to the RAM 13 for each of the divided small regions. When each small region is output to the RAM 13, the processing unit 32 determines whether or not the small region is a small region of the same value and whether or not the small region is a continuously same small region. The determination result for each small region and the compressed output feature map, which is compressed for the small region determined to be a small region of the same value or a continuously same small region, are output to the RAM 13.

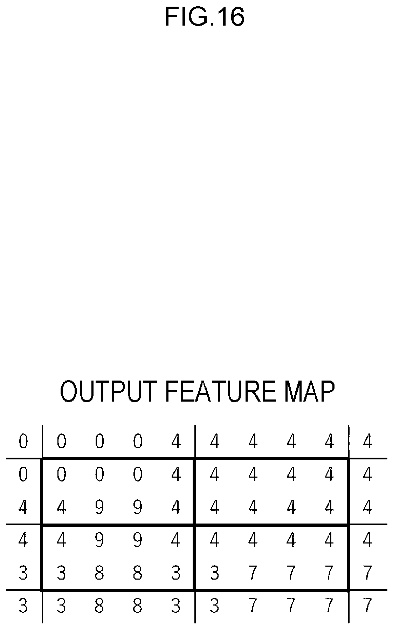

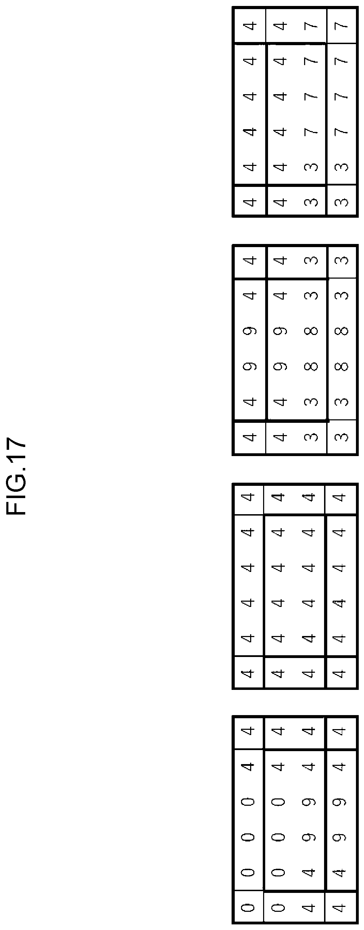

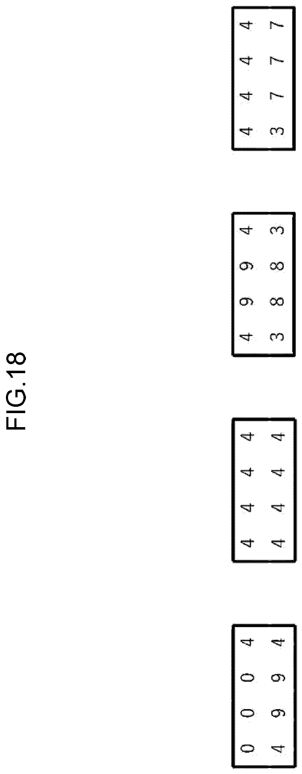

Here, the output feature map is divided into small regions as illustrated in Fig. 16. In Fig. 16, the region corresponding to the small region of the output feature map is displayed by the thick line frame. Note, however, that the small region of the output feature map, which is a unit for determining whether or not the small region is a small region of the same value and whether or not the small region is a continuously same small region, is a region including an overlapping region overlapping an adjacent small region (see Fig. 17). As described above, the small region serving as the unit of determination is an overlapping region overlapping an adjacent small region, and has an overlapping region corresponding to the kernel size of the convolution processing of the next layer. Note that the division of the small region is determined at the time of design. Fig. 17 illustrates an example in which, in a case where the kernel size is 3 × 3 and the small region of the output feature map is 4 × 2, the small region serving as a unit of determination is 6 × 4. Furthermore, when each small region is output to the RAM 13, as illustrated in Fig. 18, each small region not including an overlapping region overlapping an adjacent small region is output to the RAM 13. Fig. 18 illustrates an example in which the small region not including the overlapping region overlapping an adjacent small region is set to 4 × 2. Note that in a case where the kernel size of the convolution processing of the next layer is 1 × 1, the small region serving as a unit of determination does not have an overlapping region overlapping an adjacent small region.

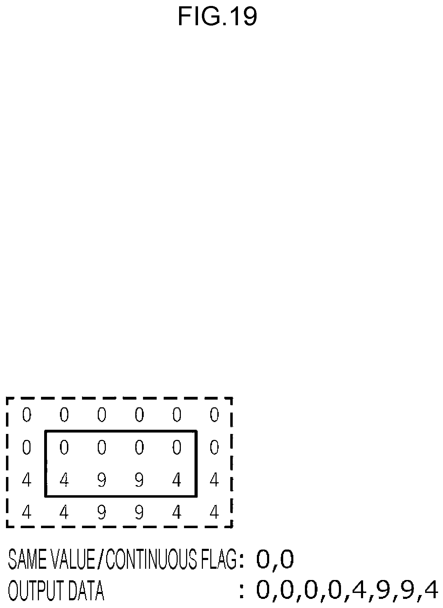

Furthermore, as illustrated in Fig. 19, when each small region is output to the RAM 13, in a case where the small region is not a small region of the same value or a continuously same small region, the small region is output to the RAM 13 as it is without being compressed. Fig. 19 illustrates an example in which the same value flag and the continuous flag indicating that the small region indicated by the dotted frame is not a small region of the same value and not a continuously same small region, and the small region data (8 values) indicated by the thick line frame and not including the overlapping region overlapping an adjacent small region are output to the RAM 13.

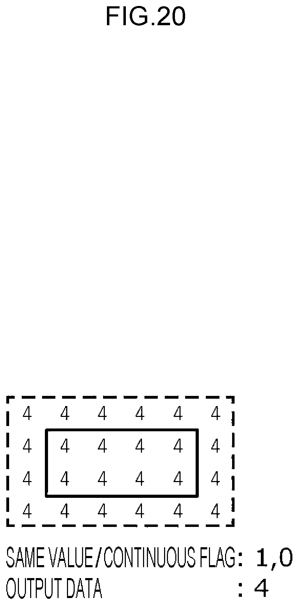

Furthermore, as illustrated in Fig. 20, when each small region is output to the RAM 13, in a case where the small region is a small region of the same value, the small region is compressed to one value and output to the RAM 13. Fig. 20 illustrates an example in which the same value flag and the continuous flag indicating that the small region to be determined indicated by the dotted frame is a small region of the same value and not a continuously same small region, and one value obtained by compressing the small region data are output to the RAM 13. As described above, in the small region of the same value, since the small region data can be expressed by only one value, it is sufficient that only one representative value be output to the RAM 13.

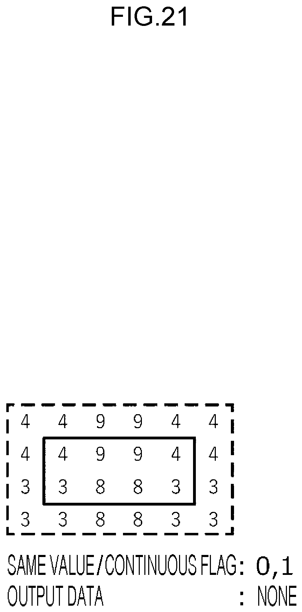

Furthermore, as illustrated in Fig. 21, when each small region is output to the RAM 13, in a case where the small region is a continuously same small region, the small region data is not output to the RAM 13. Fig. 21 illustrates an example in which the same value flag and the continuous flag indicating that the small region to be determined indicated by the dotted frame is not a small region of the same value but is a continuously same small region are output to the RAM 13, and small region data is not output. As described above, since data of a continuously same small region small region matches that of the preceding small region, output of small region data becomes unnecessary when there is a determination result that the small region is a continuously same small region.

Furthermore, when performing the convolution processing, the processing unit 32 reads the compressed output feature map of the previous layer from the RAM 13 and decompresses the read output feature map as an input feature map to be an input of the convolution processing.

Specifically, the processing unit 32 decompresses, from the previous compressed output feature map read from the RAM 13, each small region including an overlapping region overlapping an adjacent small region into small region data, and sets small region data for each small region obtained by dividing the input feature map to be an input of the convolution processing. Furthermore, the processing unit 32 performs convolution processing for each small region obtained by dividing the input feature map to be an input of the convolution processing. The convolution processing for each small region is executed using the arithmetic circuit 18. At this time, the processing unit 32 determines, for each small region, whether or not the region is a small region of the same value, and whether or not the region is a continuously same small region. At this time, on the basis of the same value flag and the continuous flag of the small region read from the RAM 13, it is determined whether or not the small region is a small region of the same value and whether or not the small region is a continuously same small region. Furthermore, the small region data of the input feature map, the kernel, the determination result for each small region, and the preliminary calculation result table are input to the arithmetic circuit 18, and the output feature map is output from the arithmetic circuit 18.

Furthermore, in a case where the processing unit 32 determines that the small region is a small region of the same value, the arithmetic circuit 18 does not perform convolution processing on the small region, and outputs a result processed for a case where all the features included in a small region have the same value stored in the preliminary calculation result table as a result of processing the small region.

Furthermore, in a case where the processing unit 32 determines that the small region is a continuously same small region, the arithmetic circuit 18 does not perform convolution processing on the small region, and outputs a result of processing on the small region processed immediately before as a result of processing the small region.

The output feature map, which is the result of the convolution processing performed for each small region as described above, is output to the RAM 13 again for each small region obtained by dividing the output feature map. At this time, for each small region, it is determined whether or not the small region is a small region of the same value and whether or not the small region is a continuously same small region, and the determination result for each small region and the compressed output feature map, which is compressed for the small region determined to be a small region of the same value or a continuously same small region, are output to the RAM 13.

Similarly to the processing unit 32, a processing unit 42 of an inference unit 22 processes the target image using a neural network including convolution processing. When outputting the output feature map to be an output of convolution processing, the processing unit 42 outputs the output feature map to the RAM 13 for each of the divided small regions. When each small region is output to the RAM 13, the processing unit 42 determines whether or not the small region is a small region of the same value and whether or not the small region is a continuously same small region. The determination result for each small region and the compressed output feature map, which is compressed for the small region determined to be a small region of the same value or a continuously same small region, are output to the RAM 13.

Furthermore, similarly to the processing unit 32, when performing the convolution processing, the processing unit 42 reads a previous compressed output feature map from the RAM 13 and decompresses the read output feature map into an input feature map to be an input of the convolution processing.

Specifically, the processing unit 42 decompresses, from the previous compressed output feature map read from the RAM 13, each small region including an overlapping region overlapping an adjacent small region into small region data, and sets small region data for each small region obtained by dividing the input feature map to be an input of the convolution processing. Furthermore, the processing unit 42 performs convolution processing for each small region obtained by dividing the input feature map to be an input of the convolution processing. The convolution processing for each small region is executed using the arithmetic circuit 18. At this time, the processing unit 42 determines, for each small region, whether or not the region is a small region of the same value, and whether or not the region is a continuously same small region. At this time, on the basis of the same value flag and the continuous flag of the small region read from the RAM 13, it is determined whether or not the small region is a small region of the same value and whether or not the small region is a continuously same small region. Furthermore, the small region data of the input feature map, the kernel, the determination result for each small region, and the preliminary calculation result table are input to the arithmetic circuit 18, and the output feature map is output from the arithmetic circuit 18.

Furthermore, similarly to the processing unit 32, in a case where the processing unit 42 determines that the small region is a small region of the same value, the arithmetic circuit 18 does not perform convolution processing on the small region, and outputs a result processed for a case where all the features included in a small region have the same value stored in the preliminary calculation result table as a result of processing the small region.

Furthermore, similarly to the processing unit 32, in a case where the processing unit 42 determines that the small region is a continuously same small region, the arithmetic circuit 18 does not perform convolution processing on the small region, and outputs a result of processing on the small region processed immediately before as a result of processing the small region.

The output feature map, which is the result of the convolution processing performed for each small region as described above, is output to the RAM 13 again for each small region obtained by dividing the output feature map. At this time, for each small region, it is determined whether or not the small region is a small region of the same value and whether or not the small region is a continuously same small region, and the determination result for each small region and the compressed output feature map, which is compressed for the small region determined to be a small region of the same value or a continuously same small region, are output to the RAM 13.

### <Operation of image processing device according to third embodiment>

Next, an operation of the image processing device 310 according to the third embodiment will be described.

The CPU 11 of the image processing device 310 reads a learning processing program from the ROM 12 or the storage 14, develops the learning processing program in the RAM 13, and executes the learning processing program, whereby processing similar to the learning processing illustrated in Fig. 7 is performed. Furthermore, learning data is input to the image processing device 310.

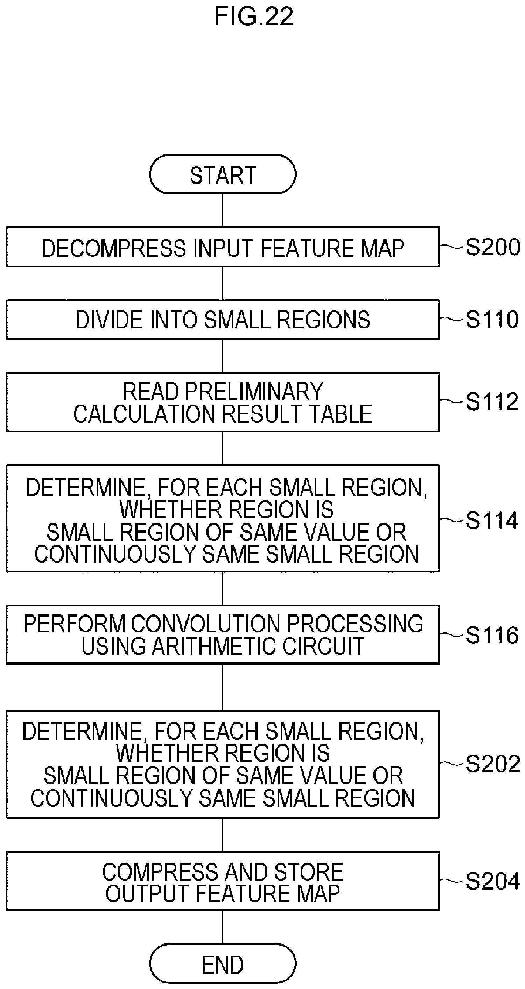

In step S102 described above, arithmetic processing of each layer of the neural network is performed. Here, the arithmetic processing of the convolution layer is achieved by a processing routine illustrated in Fig. 22.

At this time, it is assumed that the output feature map illustrated in Fig. 15 is obtained by arithmetic processing of the previous convolution layer, and the compressed output feature map is output to the RAM 13 together with the determination result of whether or not each small region is a small region of the same value and whether or not each small region is a continuously same small region.

In the example of the output feature map illustrated in Fig. 15, the same value flag and the continuous flag are as follows.
Same value flag: 0,0,1,0,0,0
Continuous flag: 0,0,0,0,1,0

In addition, the compressed output feature map has a total of 33 values as mentioned below. Note that "/" is a delimiter of the small region data.
0,0,0,0,4,9,9,4 / 0,0,0,4,4,9,9,4 / 4 / 4,9,9,4,3,8,8,3 / / 4,4,4,4,3,7,7,7

The data size output to the RAM 13 is 1 bit * 12 + 4 bits * 33 = 144 bits. Since the data size in the case of not compressing is 4 bits * 48 = 192 bits, the data size is reduced by compression of the output feature map.

In step S200, the CPU 11, as the processing unit 32, reads the previous compressed output feature map from the RAM 13 and decompresses the read output feature map into the input feature map as an input of the convolution processing.

For example, the input feature map decompressed from the aforementioned same value flag, continuous flag, and compressed output feature map is a total of 48 values as mentioned below.
0,0,0,0,4,9,9,4 / 0,0,0,4,4,9,9,4 / 4,4,4,4,4,4,4,4 / 4,9,9,4,3,8,8,3 / 4,9,9,4,3,8,8,3 / 4,4,4,4,3,7,7,7

In step S110, the CPU 11, as the processing unit 32, divides the input feature map to be an input of the convolution layer into small regions.

For example, the input feature map is divided into small regions having an overlapping region with an adjacent small region as mentioned below.
0,0,0,0,0,0,0,0,0,0,0,0,4,4,9,9,4,4,4,4,9,9,4,4 / 0,0,0,0,4,4,0,0,0,0,4,4,4,4,9,9,4,4,4,4,9,9,4,4 / 4,4,4,4,4,4,4,4,4,4,4,4,4,4,4,4,4,4,4,4,4,4,4,4 / 4,4,9,9,4,4,4,4,9,9,4,4,3,3,8,8,3,3,3,3,8,8,3,3 / 4,4,9,9,4,4,4,4,9,9,4,4,3,3,8,8,3,3,3,3,8,8,3,3 / 4,4,4,4,4,4,4,4,4,4,4,4,3,3,7,7,7,7,3,3,7,7,7,7

In step S112, the CPU 11, as the processing unit 32, reads the preliminary calculation result table of the convolution layer from the RAM 13.

In step S114, the CPU 11, as the processing unit 32, sequentially sets the divided small regions as processing targets, and determines whether features included in the processing target small region are the same value or the same as features of the small region processed immediately before on the basis of the same value flag and the continuous flag.

In step S116, the CPU 11, as the processing unit 32, outputs each small region data of the input feature map, the preliminary calculation result table, and the same value flag and the continuous flag indicating the determination result in step S114 described above to the arithmetic circuit 18. Then, the arithmetic circuit 18 performs convolution processing for each small region.

At this time, in a case where the small region to be processed is not a small region of the same value and is not a continuously same small region, the arithmetic circuit 18 performs convolution processing on the small region to be processed. In a case where the small region to be processed is a small region of the same value, the arithmetic circuit 18 does not perform convolution processing on the small region to be processed, and outputs a result processed for a case where features included in a small region have the same value stored in the preliminary calculation result table as a result of processing the small region to be processed.

Furthermore, in a case where the small region to be processed is a continuously same small region, the arithmetic circuit 18 does not perform convolution processing on the small region to be processed, and outputs a result of processing on the small region processed immediately before as a result of processing the small region to be processed.

In step S202, the CPU 11, as the processing unit 32, divides the output feature map including the processing result for each small region into small regions having an overlapping region with an adjacent small region. Then, the CPU 11, as the processing unit 32, sequentially sets the divided small regions as processing targets, and determines whether features included in the processing target small region are the same value or the same as features of the small region processed immediately before.

In step S204, the CPU 11, as the processing unit 32, performs compression processing of the output feature map using the determination result of step S202 described above, outputs the compressed output feature map to the RAM 13 together with the same value flag and the continuous flag indicating the determination result of step S202 described above, ends the processing routine, and proceeds to the arithmetic processing of the next layer.

Processing similar to the image processing illustrated in Fig. 9 is performed by the CPU 11 of the image processing device 310 reading an image processing program from the ROM 12 or the storage 14, loading the image processing program in the RAM 13, and executing the image processing program. Furthermore, a target image is input to the image processing device 310.

In step S122 described above, arithmetic processing of each layer of the neural network is performed. Here, the arithmetic processing of the convolution layer is achieved by the processing routine illustrated in Fig. 22.

Note that other configurations and operations of the image processing device 310 of the third embodiment are similar to those of the first embodiment, and thus, description thereof is omitted.

As described above, when outputting the output feature map to be an output of convolution processing, the image processing device according to the third embodiment outputs the output feature map to the RAM for each of divided small regions. When outputting the output feature map to the RAM for each of the small regions, the image processing device compresses and outputs the output feature map to the RAM in a case where the region is a small region of the same value or in a case where the region is a continuously same small region. As a result, the data size at the time of outputting the output feature map can be suppressed.

Furthermore, the small region as a unit for determining whether or not of a region is a small region of the same value or a continuously same small region may be a small region having no overlapping region. However, since the small region having an overlapping region according to the kernel size of the convolution processing of the next layer is set as the unit of determination, the area of the determination unit is larger when the unit of determination is a small region having the overlapping region than when the unit of determination is a small region having no overlapping region. Since the smaller the area of the determination unit, the more likely the same or continuous value is generated, the data compression performance may be degraded in a case where the unit of determination is a small region having an overlapping region as compared with a case where the unit of determination is a small region having no overlapping region. Meanwhile, when outputting the output feature map, if a small region having no overlapping region is used as a unit to determine whether or not a region is a small region of the same value or a continuously same small region, it is necessary to further use a small region having an overlapping region corresponding to the kernel size of the convolution processing of the next layer as a unit to determine whether or not a region is a small region of the same value or a continuously same small region when the convolution processing is performed. In the present embodiment, since the small region having an overlapping region corresponding to the kernel size of the convolution processing of the next layer is used as a unit of determination, additional determination processing and flag data are unnecessary, and simple compression processing can be performed.

As described above, by compressing the output feature map using the determination result for each small region for reducing the operation amount of the convolution processing, it is possible to compress the output feature map without adding processing or data to the first embodiment, and it is possible to suppress waiting for data transfer and to speed up the entire image processing using a neural network.

Furthermore, increasing the size of the small region leads to suppression of compression performance deterioration caused by setting the unit of determination to a small region having an overlapping region. For example, when M is the horizontal width of the small region having no overlapping region, N is the vertical width of the small region having no overlapping region, and k is the kernel size (k = 3 in the case of a 3 × 3 kernel), the area ratio of the area of the small region having no overlapping region to the area of the small region having no overlapping region is expressed by ((M * N)/((M + k -1) * (N + k -1))). Since this ratio approaches 1 as M and N are larger, the difference depending on whether the overlapping region is included or not decreases as the size of the small region increases, and the difference in compression performance also decreases. It is also possible to determine appropriate values of M and N by simulating the data compression performance with values of M and N in advance for the target neural network model.

Note that the present invention is not limited to the device configuration and the operational effects of the above-described embodiments, and various modifications and applications can be made without departing from the gist of the invention.

For example, in the third embodiment, the case of determining whether or not the region is a continuously same small region has been described as an example, but the present invention is not limited thereto. For example, it may be determined whether or not the small region is the same as a small region processed a few regions earlier, and in a case where the small region is the same as a small region processed a few regions earlier, data reduction may be performed by omitting output of the small region to the RAM. For example, in addition to the sameness flag indicating whether or not a region is the same as a small region output a few regions earlier, a small region interval parameter indicating how many regions earlier the same small region exists may be used to determine the same small region. As a result, further improvement in compression performance can be expected.

In each of the above embodiments, the case of determining whether or not the small region is a small region of the same value has been described as an example, but the present invention is not limited thereto. It may be determined whether or not a small region is the same as a predetermined feature pattern other than the small region of the same value. For example, in convolution processing, a processing result for a predetermined frequently appearing feature pattern may be obtained in advance, whether or not a small region is the same as the predetermined frequently appearing feature pattern may be determined, and if the small region is the same as the predetermined frequently appearing feature pattern, the processing result obtained in advance may be output without performing the convolution processing.

Furthermore, when outputting the output feature map, a representative value for a predetermined frequently appearing feature pattern may be determined in advance, whether or not a small region is the same as the predetermined frequently appearing feature pattern may be determined, and if the small region is the same as the predetermined frequently appearing feature pattern, the output feature map may be compressed to the representative value and output to the RAM.

Furthermore, the case where the image processing device includes the learning unit and the inference unit has been described as an example, but the present invention is not limited thereto. A device including a learning unit and a device including an inference unit may be configured as separate devices. In a case where hardware restrictions such as power and size are large, it is preferable to configure the device including the learning unit and the device including the inference unit as separate devices. For example, a device including an inference unit is mounted on a drone or used as an IoT or an edge device. Furthermore, a configuration in which one device includes a learning unit and an inference unit is generally a case where high-speed learning is performed using hardware installed in a data center such as cloud computing.

Various types of processing executed by the CPU reading and executing software (program) in the foregoing embodiment may be executed by various processors other than the CPU. Examples of the processors in this case include a programmable logic device (PLD) of which a circuit configuration can be changed after the manufacturing, such as a field-programmable gate array (FPGA), and a dedicated electric circuit that is a processor having a circuit configuration exclusively designed for executing specific processing, such as an application specific integrated circuit (ASIC). Furthermore, the learning processing or the image processing may be executed by one of these various processors, or may be performed by a combination of two or more processors of the same type or different types (for example, a plurality of FPGAs, a combination of a CPU and an FPGA, and the like). More specifically, a hardware structure of the various processors is an electric circuit in which circuit elements such as semiconductor elements are combined.

Furthermore, in the above embodiments, the aspect in which the learning processing program and the image processing program are stored (installed) in advance in the storage 14 has been described, but the present invention is not limited thereto. The program may be provided by being stored in a non-transitory storage medium such as a compact disk read only memory (CD-ROM), a digital versatile disk read only memory (DVD-ROM), and a universal serial bus (USB) memory. Furthermore, the program may be downloaded from an external device via a network.

### Reference Signs List

- 10, 210, 310: Image processing device
- 11: CPU
- 13: RAM
- 18: Arithmetic circuit
- 20: Learning unit
- 22: Inference unit
- 30, 40: Acquisition unit
- 32, 42: Processing unit
- 34: Update unit

## Claims

1. An image processing device including a neural network including convolution processing for an image, the image processing device comprising:
an acquisition unit that acquires a target image to be processed; and
a processing unit that processes the target image using the neural network including convolution processing, wherein:
when an output feature map constituting an output of the convolution processing is output, the processing unit outputs, to a storage unit, respective small regions dividing the output feature map, and
when each of the small regions is output to the storage unit, in a case in which a feature included in the small region is the same as a predetermined feature or a feature of a small region output in the past, the processing unit compresses and outputs the predetermined feature or the feature of the small region output in the past to the storage unit.

2. The image processing device according to claim 1, wherein:
when the convolution processing is performed using the neural network including continuous convolution processing,
the processing unit reads an output feature map of a previous convolution processing from the storage unit, and performs the convolution processing for each of small regions obtained by dividing an input feature map constituting an input of the convolution processing, and
when the convolution processing is performed for each of the small regions, in a case in which a feature included in the small region is the same as a predetermined feature or a feature of a small region processed in the past, the processing unit does not perform the convolution processing on the small region, and outputs a result of processing on the predetermined feature or a result of processing in the past as a result of processing the small region.

3. The image processing device according to claim 1 or 2, wherein the processing unit sets a small region that has an overlapping region overlapping an adjacent small region and having a size corresponding to a kernel size of the convolution processing of a subsequent stage as a small region obtained by dividing the output feature map, and determines whether a feature included in the small region is the same as the predetermined feature or the feature of a small region output in the past.

4. The image processing device according to any one of claims 1 to 3, wherein the predetermined feature includes features in the small region which are the same.

5. An image processing method of an image processing device including a neural network including convolution processing for an image, the image processing method comprising:
acquiring, by an acquisition unit, a target image to be processed; and
processing, by a processing unit, the target image using the neural network including convolution processing, wherein:
when an output feature map constituting an output of the convolution processing is output, the processing unit outputs, to a storage unit, respective small regions dividing the output feature map, and
when each of the small regions is output to the storage unit, in a case in which a feature included in the small region is the same as a predetermined feature or a feature of a small region output in the past, the processing unit compresses and outputs the predetermined feature or the feature of the small region output in the past to the storage unit.

6. An image processing program for causing a computer including a neural network including convolution processing for an image to execute:
acquiring a target image to be processed; and
processing the target image using the neural network including convolution processing, wherein:
when an output feature map constituting an output of the convolution processing is output, respective small regions dividing the output feature map are output to a storage unit, and
when each of the small regions is output to the storage unit, in a case in which a feature included in the small region is the same as a predetermined feature or a feature of a small region output in the past, the predetermined feature or the feature of the small region output in the past is compressed and output to the storage unit.

## Patentansprüche

1. Bildverarbeitungsvorrichtung, einschließlich eines neuronalen Netzwerks, einschließlich einer Faltungsverarbeitung für ein Bild, die Bildverarbeitungsvorrichtung umfassend:
eine Erfassungseinheit, die ein zu verarbeitendes Zielbild erfasst; und
eine Verarbeitungseinheit, die das Zielbild unter Verwendung des neuronalen Netzwerks, einschließlich der Faltungsverarbeitung, verarbeitet, wobei:
wenn eine Ausgabemerkmalskarte, die eine Ausgabe der Faltungsverarbeitung bildet, ausgegeben wird, die Verarbeitungseinheit, an eine Speichereinheit, jeweilige kleine Bereiche, die die Ausgabemerkmalskarte unterteilen, ausgibt, und
wenn jeder der kleinen Bereiche an die Speichereinheit ausgegeben wird, in einem Fall, in dem ein in dem kleinen Bereich enthaltenes Merkmal das gleiche wie ein vorbestimmtes Merkmal oder ein Merkmal eines in der Vergangenheit ausgegebenen kleinen Bereichs ist, die Verarbeitungseinheit das zuvor bestimmte Merkmal oder das Merkmal des in der Vergangenheit ausgegebenen kleinen Bereichs komprimiert und an die Speichereinheit ausgibt.

2. Bildverarbeitungsvorrichtung nach Anspruch 1, wobei:
wenn die Faltungsverarbeitung unter Verwendung des neuronalen Netzwerks, einschließlich einer kontinuierlichen Faltungsverarbeitung, durchgeführt wird,
die Verarbeitungseinheit eine Ausgabemerkmalskarte einer vorherigen Faltungsverarbeitung aus der Speichereinheit liest und die Faltungsverarbeitung für jeden der kleinen Bereiche durchführt, die durch Unterteilen einer Eingabemerkmalskarte, die eine Eingabe der Faltungsverarbeitung bildet, erhalten werden, und
wenn die Faltungsverarbeitung für jeden der kleinen Bereiche durchgeführt wird, in einem Fall, in dem ein in dem kleinen Bereich enthaltenes Merkmal das gleiche wie ein vorbestimmtes Merkmal oder ein Merkmal eines in der Vergangenheit verarbeiteten kleinen Bereichs ist, die Verarbeitungseinheit die Faltungsverarbeitung an dem kleinen Bereich nicht durchführt und ein Ergebnis einer Verarbeitung an dem zuvor bestimmten Merkmal oder ein Ergebnis der Verarbeitung in der Vergangenheit als ein Ergebnis der Verarbeitung des kleinen Bereichs ausgibt.

3. Bildverarbeitungsvorrichtung nach Anspruch 1 oder 2, wobei die Verarbeitungseinheit einen kleinen Bereich, der einen überlappenden Bereich aufweist, der einen angrenzenden kleinen Bereich überlappt und eine Größe aufweist, die einer Kernel-Größe der Faltungsverarbeitung einer nachfolgenden Stufe entspricht, als einen kleinen Bereich, der durch Teilen der Ausgabemerkmalskarte erhalten wird, einstellt und bestimmt, ob ein in dem kleinen Bereich enthaltenes Merkmal das gleiche wie das zuvor bestimmte Merkmal oder das Merkmal eines in der Vergangenheit ausgegebenen kleinen Bereichs ist.

4. Bildverarbeitungsvorrichtung nach einem der Ansprüche 1 bis 3, wobei das zuvor bestimmte Merkmal Merkmale in dem kleinen Bereich einschließt, die gleich sind.

5. Bildverarbeitungsverfahren einer Bildverarbeitungsvorrichtung, einschließlich eines neuronalen Netzwerks, einschließlich der Faltungsverarbeitung für ein Bild, das Bildverarbeitungsverfahren umfassend:
Erfassen, durch eine Erfassungseinheit, eines zu verarbeitenden Zielbilds; und
Verarbeiten, durch eine Verarbeitungseinheit, des Zielbilds unter Verwendung des neuronalen Netzwerks, einschließlich der Faltungsverarbeitung, wobei:
wenn eine Ausgabemerkmalskarte, die eine Ausgabe der Faltungsverarbeitung bildet, ausgegeben wird, die Verarbeitungseinheit, an eine Speichereinheit, jeweilige kleine Bereiche, die die Ausgabemerkmalskarte unterteilen, ausgibt, und
wenn jeder der kleinen Bereiche an die Speichereinheit ausgegeben wird, in einem Fall, in dem ein in dem kleinen Bereich enthaltenes Merkmal das gleiche wie ein vorbestimmtes Merkmal oder ein Merkmal eines in der Vergangenheit ausgegebenen kleinen Bereichs ist, die Verarbeitungseinheit das zuvor bestimmte Merkmal oder das Merkmal des in der Vergangenheit ausgegebenen kleinen Bereichs komprimiert und an die Speichereinheit ausgibt.

6. Bildverarbeitungsprogramm zum Veranlassen eines Computers, einschließlich eines neuronalen Netzwerks, einschließlich der Faltungsverarbeitung für ein Bild, Folgendes auszuführen:
Erfassen eines zu verarbeitenden Zielbilds; und
Verarbeiten des Zielbilds unter Verwendung des neuronalen Netzwerks, einschließlich der Faltungsverarbeitung, wobei:
wenn eine Ausgabemerkmalskarte, die eine Ausgabe der Faltungsverarbeitung bildet, ausgegeben wird, jeweilige kleine Bereiche, die die Ausgabemerkmalskarte unterteilen, an eine Speichereinheit ausgegeben werden, und
wenn jeder der kleinen Bereiche an die Speichereinheit ausgegeben wird, in einem Fall, in dem ein in dem kleinen Bereich enthaltenes Merkmal das gleiche wie ein vorbestimmtes Merkmal oder ein Merkmal eines in der Vergangenheit ausgegebenen kleinen Bereichs ist, das zuvor bestimmte Merkmal oder das Merkmal des in der Vergangenheit ausgegebenen kleinen Bereichs komprimiert und an die Speichereinheit ausgegeben wird.

## Revendications

1. Un dispositif de traitement d'images comprenant un réseau de neurones comportant un traitement par convolution traitement d'une image, le dispositif de traitement d'images comprenant:
une unité d'acquisition qui acquiert une image cible à traiter; et
une unité de traitement qui traite l'image cible en utilisant le réseau de neurones comportant un traitement par convolution, dans lequel:
lorsqu'une carte de caractéristiques de sortie constituant une sortie du traitement par convolution est produite, l'unité de traitement transmet à une unité de stockage les petites régions respectives obtenues en divisant la carte de caractéristiques de sortie, et
lorsque chacune des petites régions est transmise à l'unité de stockage, dans le cas où une caractéristique incluse dans la petite région est identique à une caractéristique prédéterminée ou à une caractéristique d'une petite région sortie antérieurement, l'unité de traitement compresse et transmet la caractéristique prédéterminée ou la caractéristique de la petite région sortie antérieurement à l'unité de stockage.

2. Le dispositif de traitement d'images selon la revendication 1, dans lequel:
lorsque le traitement par convolution est effectué en utilisant le réseau de neurones incluant un traitement par convolution continu,
l'unité de traitement lit une carte de caractéristiques de sortie d'un traitement par convolution précédent depuis l'unité de stockage, et effectue le traitement par convolution pour chacune des petites régions obtenues en divisant une carte de caractéristiques d'entrée constituant l'entrée du traitement par convolution, et
lorsque le traitement par convolution est effectué pour chacune des petites régions, dans le cas où une caractéristique incluse dans la petite région est identique à une caractéristique prédéterminée ou à la caractéristique d'une petite région traitée antérieurement, l'unité de traitement n'effectue pas le traitement par convolution sur la petite région, et fournit comme résultat du traitement de la petite région le résultat du traitement appliqué à la caractéristique prédéterminée ou le résultat du traitement antérieur.

3. Le dispositif de traitement d'images selon la revendication 1 ou 2, dans lequel l'unité de traitement définit, parmi les petites régions obtenues en divisant la carte de caractéristiques de sortie, une petite région présentant une zone de chevauchement avec une petite région adjacente et ayant une taille correspondant à la taille du noyau du traitement par convolution de l'étage suivant, et détermine si la caractéristique incluse dans cette petite région est identique à la caractéristique prédéterminée ou à la caractéristique d'une petite région sortie antérieurement.

4. Le dispositif de traitement d'images selon l'une quelconque des revendications 1 à 3, dans lequel la caractéristique prédéterminée comprend des caractéristiques identiques dans la petite région.

5. Un procédé de traitement d'images d'un dispositif de traitement d'images comprenant un réseau de neurones incluant un traitement par convolution pour une image, le procédé de traitement d'images consistant à:
acquérir, par une unité d'acquisition, une image cible à traiter; et
traiter, par une unité de traitement, l'image cible à l'aide du réseau de neurones incluant un traitement par convolution, dans lequel:
lorsqu'une carte de caractéristiques de sortie constituant la sortie du traitement par convolution est produite, l'unité de traitement transmet à une unité de stockage les petites régions respectives divisant la carte de caractéristiques de sortie, et
lorsque chacune des petites régions est transmise à l'unité de stockage, dans le cas où une caractéristique incluse dans la petite région est identique à la caractéristique prédéterminée ou à une caractéristique d'une petite région sortie antérieurement, l'unité de traitement compresse et transmet à l'unité de stockage la caractéristique prédéterminée ou la caractéristique de la petite région sortie antérieurement.

6. Un programme de traitement d'images destiné à faire exécuter par un ordinateur comprenant un réseau de neurones incluant un traitement par convolution pour une image:
acquérir une image cible à traiter; et
traiter l'image cible à l'aide du réseau de neurones incluant un traitement par convolution, dans lequel:
lorsqu'une carte de caractéristiques de sortie constituant une sortie du traitement par convolution est produite, les petites régions respectives divisant la carte de caractéristiques de sortie sont transmises à une unité de stockage, et
lorsque chacune des petites régions est transmise à l'unité de stockage, dans le cas où une caractéristique incluse dans la petite région est identique à une caractéristique prédéterminée ou à une caractéristique d'une petite région sortie antérieurement, la caractéristique prédéterminée ou la caractéristique de la petite région sortie antérieurement est compressée et transmise à l'unité de stockage.
